Europäisches Patentamt

European Patent Office

Office européen des brevets

(19)

(11) **EP 0 779 585 A2**

(12) **EUROPÄISCHE PATENTANMELDUNG**

(43) Veröffentlichungstag:
18.06.1997 Patentblatt 1997/25

(51) Int. Cl.$^6$: **G06F 17/10**, G06F 15/78

(21) Anmeldenummer: 96118513.9

(22) Anmeldetag: 15.11.1996

(84) Benannte Vertragsstaaten:
FR GB IT

(30) Priorität: 11.12.1995 DE 19546168

(71) Anmelder: SIEMENS AKTIENGESELLSCHAFT
80333 München (DE)

(72) Erfinder:
• de Vos, Luc
81541 München (DE)
• Goryn, Daniel
81929 München (DE)

(54) **Digitale Signalprozessoranordnung zum Vergleich von Merkmalsvektoren und zugehöriges Betriebsverfahren**

(57) Mit der Erfindung wird ein digitaler Signalprozessor für die Nutzung zur Sprachverarbeitung oder zur anderweitigen Mustererkennung verwendbar gemacht. Um den Schwächen von digitalen Signalprozessoren bei der Subtraktion mit anschließender Betragsbildung, welche in diesen Anwendungsfällen häufig durchzuführen ist, abzuhelfen, ist eine Zusatz-Hardware vorgesehen, die in einem separaten Speicher den Merkmalsvektor enthält, welcher mit Referenzmerkmalsvektoren aus dem Wörterbuch zu vergleichen ist. Die Rechenarbeit wird dabei von einer separaten Recheneinheit durchgeführt, welche für jeden Merkmalsvergleich eine separate Differenzbildungs- und Betragsbildungseinheit vorsieht. Durch die Erfindung kann die Anzahl der je Vergleich benötigten Taktzyklen des digitalen Signalprozessors dramatisch reduziert werden. Ein geeignetes Adressierungsverfahren stellt dabei sicher, daß immer korrespondierende Merkmale der einzelnen Merkmalsvektoren miteinander vergleichbar sind.

Figur 1

EP 0 779 585 A2

# Beschreibung

Als spezialisierte Prozessorart werden digitale Signalprozessoren häufig für komplexe und rechenintensive Signalverarbeitungsprobleme eingesetzt. Für den jeweiligen Anwendungsfall stehen in Abhängigkeit der durchzuführenden Rechenoperationen unterschiedliche Typen von digitalen Signalprozessoren (DSP) zur Verfügung. Eine Typklasse zeichnet sich durch eingebaute Addierer besonders durch schnelle Verarbeitung von Additionsrechnungen aus, während jedoch Multiplikationen mehrere Schieberegisteroperationen erfordern und damit mehrere Prozessortaktzyklen dauern. Eine andere Typklasse ist akkumulator- multiplikatorbasiert und kann sehr effizient Multiplikationsrechnungen durchführen, während hingegen dort die Summenbildung über Operatoren nicht schneller als eine Multiplikation ausgeführt werden kann.

Ein besonderes Problem stellt sich dem Schaltungsfachmann, wenn er bei der Implementierung von Signalverarbeitungsalgorithmen sowohl Additionsaufgaben, als auch Multiplikationsaufgaben in großer Menge durchführen muß. Ein solches Leistungsproblem tritt zum Beispiel dann auf, wenn eine Aufgabe so gestellt wird, daß ein Merkmalsvektor welcher aus einem aktuell anliegenden Signal erzeugt wurde, innerhalb eines vorgegebenen Zeitrahmens mit allen Referenzmerkmalen eines Referenzmerkmalsvektors im Prozessorspeicher verglichen werden soll. In Abhängigkeit der Speicherwortbreite, der Datenbusbreite, der Datenbusbreite und der Speichertiefe, kann das Problem auftreten, daß nicht alle Merkmale, welche im Datenspeicher des digitalen Signalprozessors abgelegt sind, mit einem eingehenden Meßsignal verglichen werden können, da die Zeitbedingungen der zugrunde liegenden Anwendung dann nicht mehr erfüllt werden könnten.

Will man digitale Signalprozessoren für den Masseneinsatz von Spracherkennungssystemen nutzbar machen, so bieten sich für die Lösung dieses Problems verschiedene Varianten an.

Bei der Sprachmerkmalsanalyse wird zunächst aus dem gesprochenen Sprachsignal während eines Zeitrahmens ein Merkmalsvektor extrahiert, der beispielsweise aus k Bytes besteht. Dieser Merkmalsvektor wird in der Folge als Prüfmerkmalsvektor bezeichnet. Anschließend muß dieser Merkmalsvektor mit dem benötigten Wortschatz, d.h. den zum Wortschatz gehörenden Phonemsegmenten, welche beispielsweise ebenfalls im Speicher des digitalen Signalprozessors als Merkmalsvektoren abgelegt sind, verglichen werden. Für das Maß der Übereinstimmung der Merkmalsvektoren werden die sog. Emissionswahrscheinlichkeiten bestimmt. Hierzu wird beispielsweise der City-Block-Abstand zwischen dem Prüfmerkmalsvektor und allen Phonemsegment-Merkmalsvektoren, welche in der Folge als Referenzmerkmalsvektoren bezeichnet werden, bestimmt. Der kleinste City-Block-Abstand ist dann das Maß für die Übereinstimmung zwischen dem Prüfmerkmalsvektor und dem betrachteten Phonemsegment.

Basierend auf diesen berechneten Emissionswahrscheinlichkeiten wird im dritten Teil eines Spracherkennungssystems beispielsweise festgelegt, welches Wort des zugrunde liegenden Lexikons erkannt wurde. Die Wortbreite des Adreßbusses bestimmt beispielsweise die maximale Größe N des DSP-eigenen Speichers. Bei einer Speicherwortbreite von n Bytes können somit N x n Bytes in diesem Speicher abgelegt werden. Die Obergrenze für die Anzahl der abzuspeichernden Referenzmerkmalsvektoren läßt sich damit als N x n/k berechnen.

In einem Zeitabschnitt, der einem abgetasteten Signalframe entspricht, typischerweise sind dies 10 ms, muß nun u.a. der City-Block-Abstand zwischen dem Prüfmerkmalsvektor und allen Referenzmerkmalsvektoren berechnet werden. Wegen der hohen Anzahl der Referenzmerkmalsvektoren, die beispielsweise je Anwendungsfall von 1000 bis 20.000 betragen kann, ist dieses Problem sehr rechenintensiv. Ebenso wie bei der Sprachverarbeitung treten solche Mustererkennungsprobleme auch bei der Bildsignalverarbeitung oder allgemein bei zeitvarianten Meßsignalen auf.

Die erste Variante zur Lösung dieses rechnerischen Problems besteht darin, daß die Unterschiede anhand einer Differenzberechnung mit anschließender Akkumulation durchgeführt werden. In der Regel sind jedoch DSP nicht auf die effiziente Berechnung von Summen von Differenzbeträgen ausgelegt. Für diese Berechnungen werden außerdem zusätzliche Taktzyklen für das selektive Auslesen einzelner Bytes der Speicherworte benötigt. Insgesamt kann für eine Operation $D = D + |a-b|$ von mindestens 5 Systemtaktzyklen ausgegangen werden. Die maximale Anzahl der vom DSP behandelbaren Referenzmerkmalsvektoren kann hierdurch für eine vorgegebene Erkennungsrate unzureichend werden. D bezeichnet hierbei den City-Block-Abstand und a ein Merkmal a beispielsweise in Form eines Bytes und b ein Merkmal b beispielsweise in Form eines Bytes.

Eine zweite Variante besteht in der Auslagerung der komplizierten Berechnungen auf eine externe Hardware, z.B. einen anwenderspezifischen Schaltkreis. Durch eine Berechnung mit Anwendung spezifischer Bausteine können durch Parallelisierung prinzipiell beliebige Beschleunigungsfaktoren realisiert werden. Gleichzeitig aber werden entsprechend erhöhte Anforderungen an die Datenkommunikation gestellt. Dabei gilt je höher der off-Chip Berechnungsdurchsatz werden soll, desto höher wird auch die erforderliche Speicher-Bandbreite. Hierdurch wachsen die Hardware- und Schnittstellenkosten empfindlich an, was sich bei Massenprodukten negativ im Endverkaufspreis auswirken würde.

Die der Erfindung zugrunde liegende Aufgabe besteht also darin, ein Verfahren und eine Anordnung anzugeben, mit der die Leistungsfähigkeit eines digitalen Signalprozessors beim Vergleich von Merkmalsvektoren erhöht werden kann, ohne daß hierfür technisch aufwendige und teure Zusatzeinrichtungen geschaffen werden müssen.

Die Aufgabe wird für die digitale Signalprozessoranordnung gemäß den Merkmalen des Patentanspruchs 1 gelöst. Die Lösung für das Betriebsverfahren der Anordnung wird gemäß den Merkmalen des Patentanspruchs 7 angegeben.

Weiterbildungen der Erfindung ergeben sich aus den abhängigen Ansprüchen.

Ein besonderer Vorteil der erfindungsgemäßen Anordnung besteht darin, daß sie für den digitalen Signalprozessor transparent, ein Berechnungsergebnis zur Verfügung stellt, wozu dieser jedoch lediglich eine Speicheradresse erzeugen muß. In Abhängigkeit der Datenbusbreite und der Speicherwortbreite, können so während eines Prozessortaktzyklusses mehrere Merkmale eines Prüfmerkmalsvektors verglichen werden. Die zugrunde liegende Hardwarestruktur des Prozessors in Form von Datenbussen wird dabei optimal ausgenutzt. Die Adresse wird am Adreßbus erzeugt und das Berechnungsergebnis steht beispielsweise unmittelbar, oder 1 oder mehrere Takte später nach der Erzeugung der Adresse am Datenbus zur Verfügung. Für den Prozessor hat es also den Anschein als sei das am Datenbus zur Verfügung gestellte Berechnungsergebnis im Speicher des Prozessors gespeichert gewesen.

Vorteilhaft können bei der erfindungsgemäßen Anordnung ein separater Daten- und Adreßbus vorgesehen werden, d.h. es muß also kein Multiplexvorgang stattfinden. Damit kann der Rechendurchsatz für besonders rechenintensive Anwendungsfälle weiter erhöht werden.

Vorteilhaft werden die Speicherwortbreite des Prüfspeichers und des Datenspeichers gleich gewählt, denn bei geeigneter Anordnung der Merkmale im Prüfspeicher und im Datenspeicher, kann so die vom Prozessor für den Datenspeicher generierte Adresse auch zur Adressierung des Prüfspeichers verwendet werden, indem lediglich die least significant bits dieser Adresse an den Prüfspeicher zu dessen Adressierung weitergeleitet werden.

Besonders vorteilhaft werden die einzelnen Merkmalsvektoren beim erfindungsgemäßen Verfahren in Vielfachen der Datenspeicherwortbreite beschrieben, da damit die Adressierung der einzelnen Merkmale weiter vereinfacht werden kann.

Vorteilhaft sieht eine Ausführungsform der erfindungsgemäßen Anordnung eine Variante für den Fall vor, daß die bitweise Darstellung der Merkmale des Merkmalsvektors verschieden groß ist von einem Vielfachen der Speicherwortbreite. In diesem Fall können durch einfache Adreßumwandlung, ausgehend von der vom Rechenkern erzeugten Adresse, trotzdem die Merkmale im Prüfspeicher zyklisch adressiert werden und zwar vom ersten bis zum letzten und dann wieder erneut beim ersten beginnend, während für die im Datenspeicher vorliegenden Merkmale der Referenzmerkmalsvektoren diese Adresse unverändert übernommen werden kann.

Besonders vorteilhaft können mit der erfindungsgemäßen Anordnung Merkmale von Sprachsignalen verglichen werden, da diese gebräuchlicherweise in Form von Merkmalsvektoren analysiert und dargestellt werden.

Mit dem Betriebsverfahren für die erfindungsgemäße Anordnung werden vorteilhafterweise die Merkmale des Prüfmerkmalsvektors und die jeweiligen Merkmale eines einzigen Referenzmerkmalsvektors so adressiert, daß sie Merkmal für Merkmal, auch paarweise oder auch in mehreren Paaren, in Abhängigkeit der Datenbreite des Datenbusses, verglichen werden können. Vorteilhafterweise sind deshalb die einzelnen zu vergleichenden Merkmalsvektoren im Datenspeicher hintereinander in derselben Reihenfolge ihrer Merkmale angeordnet. Durch zyklisches Adressieren wird beispielsweise immer wieder derselbe Prüfmerkmalsvektor mit unterschiedlichen Referenzmerkmalsvektoren verglichen und zwar genau in der Form, daß immer jeweils ein Prüfmerkmalsvektor mit genau einem Referenzmerkmalsvektor in einem Verfahrensabschnitt verglichen wird.

Besonders vorteilhaft werden beim erfindungsgemäßen Betriebsverfahren die entsprechenden Datenwortbreiten und die Datenbusbreiten aufeinander abgestimmt, so daß durch zyklisches Adressieren des Datenspeichers mit fortlaufenden Adressen auch der sich im Prüfspeicher befindliche Prüfmerkmalsvektor adressiert werden kann, indem ihm lediglich die least significant bits der Datenspeicheradresse zugeführt werden.

Im folgenden wird die Erfindung anhand von Figuren weiter erläutert.

Figur 1 zeigt ein Beispiel für eine erfindungsgemäße Signalprozessoranordnung,
Figur 2 gibt ein Beispiel für den Vergleich von zwei Merkmalen an.

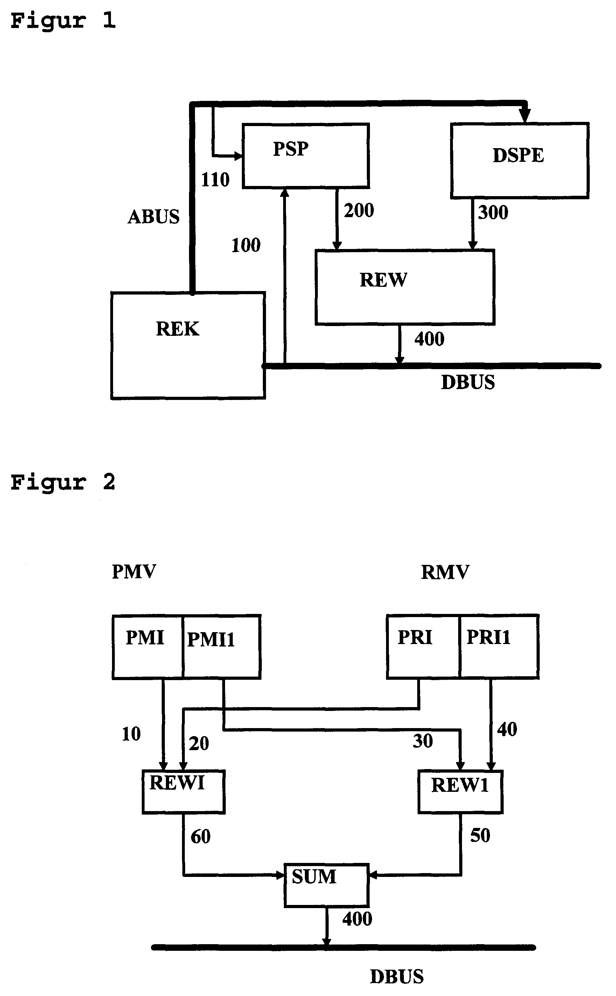

In Figur 1 ist ein Beispiel einer erfindungsgemäßen digitalen Signalprozessoranordnung dargestellt. Dort sind der Rechenkern des digitalen Signalprozessors REK sowie der Prüfspeicher PSP und der Datenspeicher DSPE zusammen mit dem Rechenwerk REW dargestellt. In diesem Beispiel ist ein separater Adreßbus ABUS und ein separater Datenbus DBUS für den digitalen Signalprozessor vorgesehen. Beim Betrieb der erfindungsgemäßen Signalprozessoranordnung wird beispielsweise dem Rechenkern REK ein digitalisiertes Sprachsignal zugeführt und dieser berechnet daraus, einen Merkmalsvektor, der hier als Prüfmerkmalsvektor bezeichnet wird, und legt diesen über den Datenbus DBUS und die Zuführleitung 100 in dem Prüfspeicher PSP der erfindungsgemäßen Anordnung ab. Im Datenspeicher des digitalen Signalprozessors DSPE sind beispielsweise die Referenzmerkmalsvektoren abgelegt, welche zu erkennende Sprachmerkmale darstellen. In der Folge sollen diese Referenzmerkmalsvektoren alle mit dem Prüfmerkmalsvektor verglichen werden. Hierzu werden beispielsweise vom Rechenkern REK über den Adreßbus ABUS Adressen an den Datenspeicher DSPE und an den Prüfspeicher PSP angelegt. Der Prüfspeicher PSP ist üblicherweise kleiner, da er nur einen Merkmalsvektor aufnehmen muß und erhält deswegen über die Zuführleitung 110 beispielsweise nur eine Fraktion der Adresse, welche am Adreßbus ABUS anliegt. Die Adresse muß hierzu so beschaffen sein, daß sie der Adreßwortbreite nach ausreicht um sämtliche Merkmale des im Prüfspeicher abgelegten Prüfmerkmalsvektors nacheinander adressieren zu können. Für den Datenspeicher DSPE, welcher vorzugsweise den gesamten zu erkennenden Phonemschatz in Form von Merkmalsvektoren enthält, sind entsprechend größere Adressen zur Adressierung aller Merkmale erforderlich. Vorzugsweise sieht das erfindungsgemäße Verfahren vor, daß die Merkmalsvektoren im Prüfspeicher und im Datenspeicher PSP und DSPE die gleiche Anzahl von Merkmalen aufweisen. Vorzugsweise sind diese Merkmale in derselben Reihenfolge, nach fortlaufenden Speicheradressen im Prüfspeicher PSP angeordnet. Dabei ist zu beachten, daß im Datenspeicher DSPE alle Merkmalsvektoren vorzugsweise immer in derselben Reihenfolge ihrer Merkmale nacheinander abgelegt sein müssen.

Durch zyklisches Adressieren des Prüfspeichers PSP, welcher beispielsweise nur die least significant bits des Adreßbusses erhält, können Merkmal für Merkmal, oder auch paarweise Merkmale für Merkmale im Prüfspeicher PSP und korrespondierende Merkmale im Datenspeicher DSPE adressiert werden. Diese Merkmale werden beispielsweise transparent für den digitalen Signalprozessor durch Generierung einer Adresse am Adreßbus ABUS vom Prüfspeicher und Datenspeicher PSP und DSPE über die jeweiligen Leitungen 200 und 300 an das Rechenwerk REW übertragen. Im Rechenwerk REW ist dann für die benötigten Rechenoperationen, beispielsweise zur Berechnung des City-Block-Abstandes, je Merkmal ein separates Prozessorelement vorhanden. Je breiter der Datenbus DBUS des digitalen Signalprozessors ist und je kürzer die Merkmale in Bezug auf diesen Datenbus sind, desto mehr Merkmale können im Rechenwerk REW simultan je Adressierungsvorgang verglichen werden. Vorzugsweise wird vom Rechenwerk REW beispielsweise mit einem separaten Prozessor für das jeweilige Merkmal der Betrag der Differenz zweier korrespondierender Merkmale gebildet und dieser zum Wert der simultan abgelaufenen Berechnungen addiert. Dieses Ergebnis wird anschließend am Datenbus über die Übertragungsleitung 400 zur Verfügung gestellt. Beispielsweise enthält der Rechenkern einen Zähler oder einen Programmbefehl, der es ihm erlaubt genau so viel Adressen über den ABUS zu erzeugen, bis genau ein Merkmalsvektor adressiert worden ist und die Zwischenergebnisse je Adressierungsvorgang am Datenbus DBUS aufaddiert worden sind, um so nach Ablauf des gesamten Adressierungsvorgangs für einen zu vergleichenden Merkmalsvektor den City-Block-Abstand für diesen Merkmalsvektor zu erhalten.

Durch die erfindungsgemäße Lösung wird ein erhebliche Beschleunigung der Berechnungen erreicht, ohne eine Lösung mit off-Chip Auslagerung zu erfordern. Gleichzeitig wird das Problem des selektiven Auslesens einzelner Bytes der Speicherworte implizit gelöst. Die Lösung ist außerdem für den Rechenkern REK transparent, denn er erzeugt lediglich Adressen und erhält über die Leitung 400 am Datenbus DBUS beispielsweise schon Zwischenergebnisse zur Verfügung gestellt. Es erscheint also dem Rechenkern, als sei über die erzeugte Adresse bereits ein Zwischenergebnis aus dem Datenspeicher DSPE ausgelesen worden.

Der Erfindung liegt dabei die Idee zugrunde, daß zwischen dem Datenspeicher DSPE und dem Rechenkern REK eine dedizierte Hardware eingefügt wird. Dabei besteht diese Hardware aus einer zusätzlichen Speichereinheit PSP, welche beispielsweise die Größe $k / n$ Worte aufweist. Bei k handelt es sich dabei um die Zahl der Bytes im Merkmalsvektor und bei n um die Anzahl der Bytes des Speicherwortes. In diesem Prüfspeicher PSP werden die für einen Signalabschnitt berechneten Merkmale abgespeichert. Weiterhin weist diese Zusatz-Hardware im Rechenwerk REW eine Parallelschaltung von n Rechenwerken auf, welche beispielsweise jeweils einen Differenzbetrag zwischen einem Element des Prüfmerkmalsvektors und einem korrespondierenden Element eines Referenzmerkmalsvektors berechnen. Weiterhin ist dort vorzugsweise eine Additionslogik vorgesehen, welche die parallel berechneten Differenzbeträge aufaddiert. Der Prüfspeicher wird beispielsweise so organisiert, daß die Merkmalselemente mittels der least significant bits einer Adresse für den Datenspeicher adressiert werden können. Mit einer Adresse werden so vom Rechenkern gleichzeitig zwei Datenwörter adressiert:

- ein aus n Merkmalen bestehendes Wort aus dem Prüfspeicher
- ein aus n entsprechenden Elementen eines Referenzmerkmalsvektors bestehendes Wort im Datenspeicher.

In den n Rechenwerken mit anschließender Additionseinheit, welche zuvor als separate Prozessoren bezeichnet wurden, wird hieraus eine Summe von n Differenzbeträgen addiert. Die Akkumulation der so berechneten Summen kann beispielsweise im Rechenkern der Digitalprozessoranordnung durchgeführt werden.

Von REK wird hierzu beispielsweise der Befehl „ADD (Speicherwort, Akkumulator)" ausgeführt. Anstelle des Speicherwortes erscheint jedoch - für den Rechenkern REK völlig transparent - ein in der Zusatz-Hardware berechnetes Zwischenergebnis auf dem Datenbus DBUS. Vorzugsweise kann ein angemessenes Pipelining der Zusatz-Hardware durchgeführt werden, um damit Wait-State-Zyklen möglichst zu vermeiden. Es fällt lediglich eine durch das Pipelining bedingte beschränkte Anzahl von Latenzzyklen an, die sich aber nicht auf den Datendurchsatz auswirkt.

Die Anzahl der für eine Basisoperation $D = D + |a-b|$ benötigten Systemtaktzyklen beträgt in der vorgeschlagenen Lösung 1/n. Also wird bereits für n = 2 ein Beschleunigungsfaktor von mindestens 10 erreicht. Die für die Zusatzhardware benötigte Siliziumfläche ist hierbei minimal. Die Effizienz der Implementierung ausgedrückt in Rechendurchsatz pro Siliziumfläche erhöht sich folglich nahezu um den gleichen Faktor.

Figur 2 gibt ein Beispiel für den Mehrfachvergleich von Merkmalen innerhalb des Rechenwerkes REW aus Figur 1 an. In diesem Beispiel wird davon ausgegangen, daß die Datenbusse 16 bit breit sind und daß ein Speicherwort ebenfalls 16 bit breit ist. Die Merkmale in den einzelnen Merkmalsvektoren sollen hier in einem Byte, d.h. 8 bit, beschrieben worden sein. Zur Bildung des City-Block-Abstandes werden, wie schon zuvor beschrieben, korrespondierende Merkmale des Prüfmerkmalsvektors mit jeweils korrespondierenden Merkmalen jeweils eines Referenzmerkmalsvektors verglichen. Hier sind praktisch zwei Merkmale eines Prüfmerkmalsvektors PMV, PMI und PMI1 dargestellt. Die korrespondierenden Merkmale des Referenzmerkmalsvektors RMV seien PRI und PRI1. Wie in Figur 1 bereits erläutert ist der Prüfmerkmalsvektor in der Reihenfolge aller seiner Merkmale im Prüfspeicher PSP abgelegt. Der Referenzmerkmalsvektor, der hier für den Vergleich herangezogen wird, steht an irgendeiner Stelle im Datenspeicher DSPE.

Bei der Adressierung durch das erfindungsgemäße Verfahren ist lediglich durch geeignete Bedingungen oder geeignete Vorkehrungen sicherzustellen, daß immer wieder korrespondierende Merkmale des Prüfmerkmalsvektors mit korrespondierenden Merkmalen des Referenzmerkmalsvektors verglichen werden. Dies bedeutet insbesondere, daß beispielsweise die Referenzmerkmalsvektoren nahtlos aneinander gereiht im Datenspeicher DSPE eingetragen werden müssen, und daß beginnend mit der ersten Adresse auch das erste Merkmal, welches mit dem ersten Merkmal des Prüfmerkmalsvektors korrespondiert, dort eingetragen sein muß. Die Reihenfolge der weiteren Referenzmerkmalsvektoren und deren einzelner Merkmale ergibt sich dann analog dazu. Durch eine besondere Vorkehrung des erfindungsgemäßen Verfahrens, welche von den Anwendungsparametern abhängt und die vorsieht, daß beispielsweise dem Prüfspeicher lediglich die least significant bits der Adresse für den Datenspeicher DSPE zugeführt werden, kann erreicht werden, daß der Prüfmerkmalsvektor immer vom ersten bis zum letzten Merkmal durchadressiert wird, während immer wieder neue nacheinander folgende Referenzmerkmalsvektoren durch die komplette Adresse zum Vergleich herangezogen werden.

Das hier angeführte Beispiel soll nicht bedeuten, daß die Erfindung lediglich auf 16 bit breite Worte beschränkt sein soll. Für zukünftige Entwicklungen können genau so gut 32 oder 64 bit breite Worte oder auch 8 bit breite Worte herangezogen werden. Es ist sofort anschaulich klar, daß die Parallelverarbeitung um so mehr beschleunigt wird, je breiter das Speicherwort ist und je weniger bit ein einzelnes Merkmal eines Merkmalsvektors beansprucht. Falls die Breite des Datenbusses dabei nicht einem ganzzahligen Vielfachen der Anzahl der bits in einem Merkmal entspricht, so muß durch einen geeigneten Adressenadapter sichergestellt werden, daß die Korrespondenz der einzelnen zu vergleichenden Merkmale erhalten bleibt.

In Figur 2 sind solche korrespondierenden Merkmale PMI und PRI, welche miteinander über die Leitungen 10 und 20 einem Rechenwerk REWI zugeführt werden. REWI ist dabei Bestandteil des Rechenwerkes REW aus Figur 1. Je zu vergleichendem Merkmal ist beispielsweise ein solches Rechenwerk vorgesehen. Die korrespondierenden Merkmale PMI1 und PRI1 werden über Leitungen 30 und 40 einem weiteren Rechenwerk REW1 zugeführt. In den einzelnen Rechenwerken REWI und REW1 werden die bereits bei der Erklärung von Figur 1 beschriebenen Rechnungen, Betragsbildung und Differenz, durchgeführt. Die Vergleichsergebnisse können im Anschluß aufaddiert werden und am Datenbus wiederum als beispielsweise maximal 16 bit breites Wort zur Verfügung stehen. Der Summationsvorgang findet vorzugsweise in der Additionseinheit SUM statt. Diese ist mit Leitungen 60 und 50 angeschlossen. Sie addiert vorzugsweise die Zwischenergebnisse aus REWI und REW1 auf und stellt die Summe am Datenbus DBUS über die Leitung 400 zur Weiterverarbeitung zur Verfügung.

Es ist nochmals zu betonen, daß die Erfindung nicht lediglich auf Sprachverarbeitung beschränkt sein soll. Es kann auch jede andere Art von digitaler Signalverarbeitung eine Rolle spielen, beispielsweise Bildverarbeitung oder andere zeitvariante digitale Signale, welche mit Referenzsignalen verglichen werden müssen.

**Patentansprüche**

1. Digitale Signalprozessor Anordnung zum Vergleich von Merkmalsvektoren,

   a) bei der mindestens ein Akkumulator / Multiplikator basierter Signalprozessor Rechenkern vorgesehen ist, zur Berechnung eines Prüfmerkmalsvektors,
   b) bei der mindestens ein Datenspeicher mit einer ersten Datenspeicherwortbreite vorgesehen ist, zur Aufnahme von Referenzmerkmalsvektoren,
   c) bei der mindestens ein Verbindungsbus vorgesehen ist, zur Übertragung von Daten und/oder Adressen mindestens zwischen Schaltungselementen der Anordnung, der so ausgestaltet ist, daß eine erste Datenwortbreite und eine zweite Adreßbreite übertragbar ist,

d) bei der mindestens ein Prüfspeicher mit einer zweiten Datenspeicherwortbreite vorgesehen ist, zur Aufnahme des Prüfmerkmalsvektors

e) bei der für den Vergleich mindestens ein Rechenmittel vorgesehen ist, welches je Vergleichsvorgang den Prüfmerkmalsvektor mit genau einem Referenzmerkmalsvektor vergleicht, durch Bildung des Betrages der Differenz zwischen korrespondierenden Merkmalen des Prüfmerkmalsvektors und korrespondierenden Merkmalen des Referenzmerkmalsvektors und Aufsummierung der Differenzbeträge für den jeweiligen Vergleichsvorgang,

f) wobei der Datenspeicher, der Prüfspeicher und die Rechenmittel über den Verbindungsbus mit dem Signalprozessor Rechenkern verbunden sind und der Datenspeicher, sowie der Prüfspeicher mit den Rechenmitteln verbunden sind.

2. Anordnung nach Anspruch 1, bei der ein separater Adreßbus und ein separater Datenbus als Verbindungsbus vorgesehen sind, wobei der Adreßbus mindestens den Datenspeicher, sowie den Prüfspeicher mit dem Signalprozessor Rechenkern verbindet und der Datenbus mindestens den Prüfspeicher mit dem Signalprozessor Rechenkern und den Rechenmitteln verbindet.

3. Anordnung nach einem der Ansprüche 1 oder 2, bei der die erste und die zweite Datenspeicherwortbreite gleich sind.

4. Anordnung nach einem der vorangehenden Ansprüche, bei der ein Merkmal die Größe eines Datenspeicherwortes aufweist.

5. Anordnung nach einem der vorangehenden Ansprüche, bei der zwischen Prüfspeicher und Rechenkern ein Adreßgenerator vorgesehen ist, welcher in Abhängigkeit der Anordnung der Referenzmerkmalsvektoren im Datenspeicher und in Abhängigkeit der Anordnung der Merkmale des Prüfmerkmalsvektors im Prüfspeicher aus einer am Datenbus anliegenden Datenspeicheradresse eine Prüfspeicheradresse so bestimmt, daß korrespondierende Merkmale miteinander verglichen werden.

6. Anordnung nach einem der vorangehenden Ansprüche, bei der Merkmale von Sprachsignalen verglichen werden.

7. Verfahren zum Betrieb einer Anordnung nach einem der vorangehenden Ansprüche,

a) bei dem der Signalprozessor Rechenkern zunächst eine einzige Adresse erzeugt mit der mindestens ein erstes Merkmal des Prüfmerkmalsvektors und ein erstes korrespondierendes Merkmal des Referenzmerkmalsvektors adressiert wird

b) bei dem die einzelnen Bits der jeweiligen Merkmale simultan verglichen werden,

c) bei dem das Vergleichsergebnis am Verbindungsbus zur Verfügung gestellt wird, so daß es für den Signalprozessor Rechenkern den Anschein hat, als habe er ein im Datenspeicher gespeichertes Datenwort abgerufen

d) und bei dem in Abhängigkeit der ersten und der zweiten Datenspeicherwortbreite soviel neue Adressen erzeugt werden bis die Merkmale des Prüfmerkmalsvektors und des Referenzmerkmalsvektors vollständig miteinander verglichen worden sind, wobei im Anschluß daran die Adresse des ersten Merkmals von einem weiteren Referenzmerkmalsvektor und des ersten Merkmals des Prüfmerkmalsvektors erzeugt wird.

8. Verfahren nach Anspruch 7,

a) bei dem die erste und die zweite Datenspeicherwortbreite gleich gewählt werden und einem ganzzahligen Vielfachen der Datenwortbreite des Übertragungsbusses entspricht

b) bei dem die Datenspeicherwortbreite ein ganzzahliges Vielfaches der Bitanzahl eines Merkmals ist

c) bei dem die Merkmale der Referenzmerkmalsvektoren nach fortlaufenden Adressen mit identischer Reihenfolge ihrer Einzelmerkmale sortiert im Datenspeicher hintereinander abgelegt sind,

d) bei dem der Prüfmerkmalsvektor nach fortlaufenden Adressen sortiert mit gleicher Reihenfolge seiner Einzelmerkmale, wie bei den Referenzmerkmalsvektoren im Prüfspeicher abgelegt ist

e) und bei dem dem Prüfspeicher zur Adressierung der Merkmale lediglich die der Datenwortbreite entsprechende Anzahl an Least Significant Bits von der Datenspeicheradresse zugeführt werden

## Figur 1

## Figur 2